# EUROPÄISCHE PATENTANMELDUNG

(11) **EP 4 668 013 A1**
(43) Veröffentlichungstag der Anmeldung: **24.12.2025**
(21) Anmeldenummer: 25184189.6
(22) Anmeldetag: 20.06.2025
(51) Int. Cl.: G03B 15/03, G03B 35/08, G03B 35/10

(54) **PHOTOMETRIC-STEREO-SCANNER**

(30) Priorität: 20.06.2024 DE 102024117406
(71) Anmelder: Colordigital GmbH, 50678 Köln (DE)
(72) Erfinder: Bibo, Roman, 50678 Köln (DE)
(74) Vertreter: Geskes, Christoph

(57) **Zusammenfassung**

Ein Gehäuse (12) für einen Photometric-Stereo-Scanner (10), dessen Innenraum leicht zugänglich ist und das auch für größere flächige Objekte geeignet ist, umfasst:
- einen Boden (16), der eine erste Seitenkante (16a), eine zweite Seitenkante (16b), die der ersten Seitenkante gegenüberliegt, und eine Vorderkante (16d), die die erste mit der zweiten Seitenkante verbindet, aufweist;
- eine Decke (18), an der mindestens drei Lampen (38) derart angebracht werden können, dass sie auf den Boden gerichtet sind;
- eine Umfangswand (20), die den Boden mit der Decke verbindet und einen ersten und einen zweiten Wandabschnitt (20a, 20b) aufweist;
- eine Halterung (36), an der eine Kamera (14) derart angebracht werden kann, dass die Kamera entweder unter der Decke angebracht und auf den Boden gerichtet ist oder auf der Decke angebracht und durch eine Öffnung (32b) in der Decke zum Boden gerichtet ist;
wobei
- der zweite Wandabschnitt im Wesentlichen in Form eines Helmvisiers ausgebildet und an dem Boden, der Decke und/oder dem ersten Wandabschnitt beweglich gelagert ist;
- der zweite Wandabschnitt eine Schließposition einnehmen kann, in der er zusammen mit dem Boden, der Decke und dem ersten Wandabschnitt einen Innenraum des Gehäuses umschließt;
- der zweite Wandabschnitt eine Offenposition einnehmen kann, in der der Innenraum von außen zugänglich ist und die erste und die zweite Seitenkante und die Vorderkante frei liegen.

## Beschreibung

Die Erfindung betrifft ein Gehäuse für einen Photometric-Stereo-Scanner sowie einen Photometric-Stereo-Scanner.

US 2003/193800 A1 offenbart einen Kasten zur Erzeugung einer gleichmäßigen Strahlungsintensität durch eine symmetrische Lichtquelle. Dieser Kasten umfasst ein Gehäuse, eine Vielzahl von Lampenröhren, die vertikal symmetrisch im Inneren des Gehäuses angeordnet sind, und eine Vielzahl von Streuplatten, die innerhalb des Gehäuses angebracht sind und die Lampenröhren abdecken. Das Gehäuse weist an seiner Oberseite eine obere Öffnung für die Anbringung einer Kamera zum Aufnehmen von Fotos eines in das Gehäuse eingebrachten realen Objekts und an einer Seite eine Tür auf. Das Gehäuse hat die Form eines Quaders mit einem rechteckigen Boden, einer Decke und vier rechteckigen Seitenwänden. Die Tür ist ebenfalls rechteckig und in der vorderen Seitenwand des Gehäuses angeordnet, damit der Benutzer das zu fotografierende reale Objekt nach dem Öffnen der Tür in das Gehäuse legen kann. In den vier Ecken des Gehäuses sind vier Lampenhalterungen angebracht, die jeweils eine Lampenröhre in vertikaler Richtung halten.

Bei diesem bekannten Kasten grenzen die linke und die rechte Seitenkante des rechteckigen Bodens an die linke beziehungsweise rechte Seitenwand an, sodass ein flächiges Objekt, wie beispielsweise ein Schal, Hemd, Pullover oder Handtuch, das größer als der Boden ist, nur gefaltet oder geknüllt in das Gehäuse gelegt werden kann.

Die Aufgabe der Erfindung besteht darin, ein Gehäuse für einen Photometric-Stereo-Scanner zu schaffen, dessen Innenraum leicht zugänglich ist und das auch für größere flächige Objekte geeignet ist.

Vor diesem Hintergrund schlägt die Erfindung die Gegenstände der unabhängigen Ansprüche vor. Vorteilhafte Ausführungsformen der Erfindung sind in den abhängigen Ansprüchen beschrieben.

Gemäß einem ersten Aspekt der Erfindung wird ein Gehäuse für einen Photometric-Stereo-Scanner vorgeschlagen, das Folgendes umfasst:
- einen Boden, der eine erste Seitenkante, eine zweite Seitenkante, die der ersten Seitenkante gegenüberliegt, und eine Vorderkante, die die erste mit der zweiten Seitenkante verbindet, aufweist;
- eine Decke, an der mindestens drei Lampen derart angebracht werden können, dass sie zum Boden gerichtet sind;
- eine Umfangswand, die den Boden mit der Decke verbindet und einen ersten und einen zweiten Wandabschnitt aufweist;
- mindestens eine Halterung, an der mindestens eine Kamera derart angebracht werden kann, dass die mindestens Kamera entweder unter der Decke angebracht und zum Boden gerichtet ist oder auf der Decke angebracht und durch eine Öffnung in der Decke zum Boden gerichtet ist;
   wobei
- der zweite Wandabschnitt im Wesentlichen in Form eines Helmvisiers ausgebildet und an dem Boden, der Decke und/oder dem ersten Wandabschnitt beweglich gelagert ist;
- der zweite Wandabschnitt eine Schließposition einnehmen kann, in der er zusammen mit dem Boden, der Decke und dem ersten Wandabschnitt einen Innenraum des Gehäuses umschließt;
- der zweite Wandabschnitt eine Offenposition einnehmen kann, in der der Innenraum von außen zugänglich ist und die erste und die zweite Seitenkante und die Vorderkante frei liegen.

Der Boden und die Decke sind jeweils bevorzugt durch eine Bodenbaugruppe beziehungsweise Deckenbaugruppe gebildet. Die mindestens eine Halterung ist bevorzugt an der Decke angebracht. Die Umfangswand kann nach Bedarf auf beliebige Weise ausgebildet sein, beispielsweise derart, dass sie um eine im Wesentlichen senkrechte Hochachse umlaufend in sich geschlossen ist und/oder im Wesentlichen die Mantelfläche eines geraden Kreiszylinders, einer Kugelschicht, eines Kegelstumpfes, eines regelmäßigen Pyramidenstumpfes oder eines geraden oder regulären Prismas bildet. Der Pyramidenstumpf oder das Prisma hat beispielhaft eine Grundfläche mit drei, vier, fünf, sechs, sieben, acht oder mehr Ecken.

Das Gehäuse kann nach Bedarf auf beliebige Weise ausgebildet sein, beispielsweise derart, dass es keine zusätzliche oder wenigstens eine zusätzliche Halterung umfasst.

Jede Halterung kann nach Bedarf auf beliebige Weise ausgebildet sein, beispielsweise derart, dass an ihr mindestens eine zusätzliche Kamera derart angebracht werden kann, dass die mindestens eine zusätzliche Kamera entweder unter der Decke angebracht und zum Boden gerichtet ist oder auf der Decke angebracht und durch eine Öffnung in der Decke zum Boden gerichtet ist. Die Kameras sind bevorzugt unter unterschiedlichen Winkeln zum Boden gerichtet.

Gemäß einem zweiten Aspekt der Erfindung wird ein Photometric-Stereo-Scanner vorgeschlagen, der Folgendes umfasst:
- ein Gehäuse, das gemäß dem ersten Aspekt ausgebildet ist;
- mindestens drei Lampen, die an oder unter der Decke angebracht und zum Boden gerichtet sind und die vorzugsweise in gleichen Winkelabständen um eine im Wesentlichen senkrechte Hochachse herum angeordnet sind.

Die Erfindung ermöglicht es, dass in das Gehäuse ein flaches oder flächiges Objekt, wie beispielsweise ein Schal, Hemd, Pullover oder Handtuch, das größer als der Boden ist, gelegt werden kann, ohne dieses falten oder knüllen zu müssen. Hierzu wird zunächst der visierförmige Wandabschnitt in die Offenposition bewegt, sodass die beiden Seitenkanten und die Vorderkante frei liegen, dann wird derjenige Bereich des Objekts, der gescannt werden soll, flach, also ungefaltet und ungeknüllt auf den Boden gelegt, wobei der restliche Bereich sich über diese drei Kanten erstreckt, und schließlich wird der visierförmige Wandabschnitt in die Schließposition bewegt, wobei der zu scannende Bereich flach auf dem Boden liegt und der restliche Bereich zwischen den drei Kanten und diesem Wandabschnitt verläuft und insbesondere eingeklemmt wird.

In einer beispielhaften Ausführungsform ist bestimmt, dass
- der Boden eine flache Bodenplatte umfasst;
- der zweite Wandabschnitt eine Unterkante aufweist, die in der Schließposition auf der Bodenplatte aufliegt und in der Offenposition nicht auf der Bodenplatte aufliegt.

In einer beispielhaften Ausführungsform ist bestimmt, dass
- der zweite Wandabschnitt eine Oberkante aufweist, die in der Schließposition an der Decke anliegt und in der Offenposition nicht an der Decke anliegt.

In einer beispielhaften Ausführungsform ist bestimmt, dass der zweite Wandabschnitt um eine im Wesentlichen waagerechte Schwenkachse schwenkbar ist.

In einer beispielhaften Ausführungsform ist bestimmt, dass das Gehäuse des Weiteren mindestens drei Lampen umfasst, die an oder unter der Decke angebracht und zum Boden gerichtet sind.

Dann ist vorzugsweise bestimmt, dass diese Lampen in gleichen Winkelabständen um eine im Wesentlichen senkrechte Hochachse herum angeordnet sind.

In einer beispielhaften Ausführungsform ist bestimmt, dass an mindestens einer der Halterungen ein Steuergerät für die Lampen und für die mindestens eine Kamera angebracht werden kann. Jede Halterung kann nach Bedarf auf beliebige Weise ausgebildet sein, beispielsweise derart, dass sie mindestens einen Steckverbinder, wie beispielsweise einen USB-Stecker oder Thunderbolt-Stecker, umfasst, an den die mindestens eine Kamera und/oder das Steuergerät gekoppelt werden kann.

In einer beispielhaften Ausführungsform ist bestimmt, dass das Gehäuse des Weiteren umfasst
- mindestens eine Diffusleuchte, die an oder unter der Decke angebracht und zum Boden gerichtet ist und die insbesondere an das Steuergerät gekoppelt ist; und/oder
- mindestens eine Flächenleuchte, die an oder auf dem Boden angebracht und zur Decke gerichtet ist und die insbesondere an das Steuergerät gekoppelt ist.

Jede Diffusleuchte dient zur homogenen Beleuchtung des Objekts im Gehäuse und ist dazu konfiguriert, dass sie diffuses Licht erzeugen kann, und umfasst beispielhaft eine Lampe und eine Streuscheibe, die die Lampe vom Innenraum des Gehäuses trennt.

Jede Flächenleuchte dient zur Hinterleuchtung des Objekts im Gehäuse und ist dazu konfiguriert, dass sie großflächig diffuses Licht erzeugen kann, und umfasst beispielhaft eine Lampe und eine Streuscheibe, die die Lampe vom Innenraum des Gehäuses trennt.

In einer beispielhaften Ausführungsform ist bestimmt, dass die Halterung einen ersten Rahmen umfasst, der auswechselbar auf der Decke über der Öffnung angeordnet ist und passend zu einer ersten Kamera oder einem ersten Smartphone, das eine Kamera umfasst, ausgebildet ist.

In einer beispielhaften Ausführungsform des vorgeschlagenen Scanners ist bestimmt, dass der Scanner des Weiteren ein Steuergerät umfasst, das an die Lampen gekoppelt ist und das insbesondere an der Halterung angebracht ist.

In einer beispielhaften Ausführungsform des vorgeschlagenen Scanners ist bestimmt, dass der Scanner des Weiteren mindestens eine Kamera umfasst, die an der mindestens einen Halterung angebracht ist und die insbesondere an das Steuergerät gekoppelt ist.

In einer beispielhaften Ausführungsform des vorgeschlagenen Scanners ist bestimmt, dass der Scanner mindestens zwei Kameras umfasst, die bevorzugt unter unterschiedlichen Winkeln zum Boden gerichtet sind. Jede dieser Kameras kann beispielsweise an einer eigenen Halterung angebracht und über diese an der Decke angebracht sein. Es ist aber auch möglich, dass mindestens zwei Kameras an einer gemeinsamen Halterung angebracht und über diese an der Decke angebracht sind.

In einer beispielhaften Ausführungsform des vorgeschlagenen Scanners ist bestimmt, dass das Steuergerät ein Smartphone ist, das die Kamera umfasst. Dann ist bevorzugt der Rahmen passend zu dem Smartphone ausgebildet. Bevorzugt weist der Scanner außer dieser "ersten" Kamera mindestens eine zusätzliche Kamera auf, die beispielhaft unter einem anderen Winkel als die erste Kamera zum Boden gerichtet ist und die an das Steuergerät gekoppelt ist, beispielsweise über Bluetooth, WLAN oder ein Kabel. Die zusätzliche Kamera kann beispielsweise ein separates Gerät sein oder durch ein zusätzliches Smartphone gebildet sein.

In einer beispielhaften Ausführungsform des vorgeschlagenen Scanners ist bestimmt, dass der Scanner des Weiteren Folgendes umfasst:
- mindestens eine Diffusleuchte, die unter der Decke angebracht und zum Boden gerichtet ist und die insbesondere an das Steuergerät gekoppelt ist; und/oder
- mindestens eine Flächenleuchte, die an dem Boden angebracht und zur Decke gerichtet ist und die insbesondere an das Steuergerät gekoppelt ist.

Das Steuergerät umfasst bevorzugt einen Speicher, in dem eine Anwendungssoftware gespeichert ist, die das Steuergerät ausführen kann, um gemäß einem Photometric-Stereo-Verfahren die mindestens eine Kamera und die Lampen sowie die Diffusleuchte, sofern vorhanden, und die Flächenleuchte, sofern vorhanden, anzusteuern und die von der mindestens einen Kamera erfassten Bilder zu verarbeiten.

Die Erläuterungen zu einem der Aspekte der Erfindung, insbesondere zu einzelnen Merkmalen dieses Aspektes, gelten analog für die anderen Aspekte der Erfindung.

Wird im Rahmen der vorliegenden Offenbarung der Begriff "etwa" oder "ungefähr" oder "im Wesentlichen" im Zusammenhang mit Werten oder Wertebereichen oder aber mit Eigenschaften oder Geometrien verwendet, so ist darunter ein Toleranzbereich zu verstehen, den der Fachmann auf diesem Gebiet für üblich erachtet. Insbesondere beträgt im Zusammenhang mit Werten oder Wertebereichen bei Verwendung des Begriffs "etwa" oder "ungefähr" ein Toleranzbereich ±20 %, bevorzugt ±10 % und weiter bevorzugt ±5 %. Untergrenzen von Wertebereichen können somit um 5 % bis 20 % unterschritten werden. Obergrenzen von Wertebereichen können somit um 5 % bis 20 % überschritten werden. Soweit verschiedene Wertebereiche, beispielsweise bevorzugte und weiter bevorzugte Wertebereiche, in der vorliegenden Erfindung angegeben sind, sind die Untergrenzen und die Obergrenzen der verschiedenen Wertebereiche miteinander kombinierbar.

Im Folgenden werden Ausführungsformen der Erfindung beispielhaft anhand der beigefügten Zeichnungen näher erläutert. Die daraus hervorgehenden einzelnen Merkmale sind jedoch nicht auf die einzelnen Ausführungsformen beschränkt, sondern können mit weiter oben beschriebenen einzelnen Merkmalen und/oder mit einzelnen Merkmalen anderer Ausführungsformen verbunden und/oder kombiniert werden. Die Einzelheiten in den Zeichnungen sind nur erläuternd, nicht aber beschränkend auszulegen. Die in den Ansprüchen enthaltenen Bezugszeichen sollen den Schutzbereich der Erfindung in keiner Weise beschränken, sondern verweisen lediglich auf die in den Zeichnungen gezeigten Ausführungsformen.

Die Zeichnungen zeigen in
- FIG. 1: eine perspektivische Ansicht einer bevorzugten Ausführungsform eines Gehäuses, wobei ein visierförmiger Wandabschnitt eine Schließposition einnimmt;
- FIG. 2: das Gehäuse von FIG. 1, wobei der visierförmiger Wandabschnitt eine Offenposition einnimmt;
- FIG. 3: eine perspektivische Ansicht von oben einer Deckenbaugruppe des Gehäuses von FIG. 1;
- FIG. 4: eine perspektivische Ansicht von unten zu FIG. 3;
- FIG. 5: eine perspektivische Ansicht von oben einer Montageplatte der Deckenbaugruppe sowie einer Halterung, an der ein Smartphone angebracht ist;
- FIG. 6: eine perspektivische Ansicht von oben einer Bodenbaugruppe des Gehäuses von FIG. 1;
- FIG. 7: eine perspektivische Ansicht von oben einer Montageplatte und einer Streuscheibe der Bodenbaugruppe von FIG. 6;
- FIG. 8: eine perspektivische Ansicht von oben der Montageplatte von FIG. 7; und
- FIG. 9: eine perspektivische Ansicht von oben der Halterung mit dem Smartphone von FIG. 5.

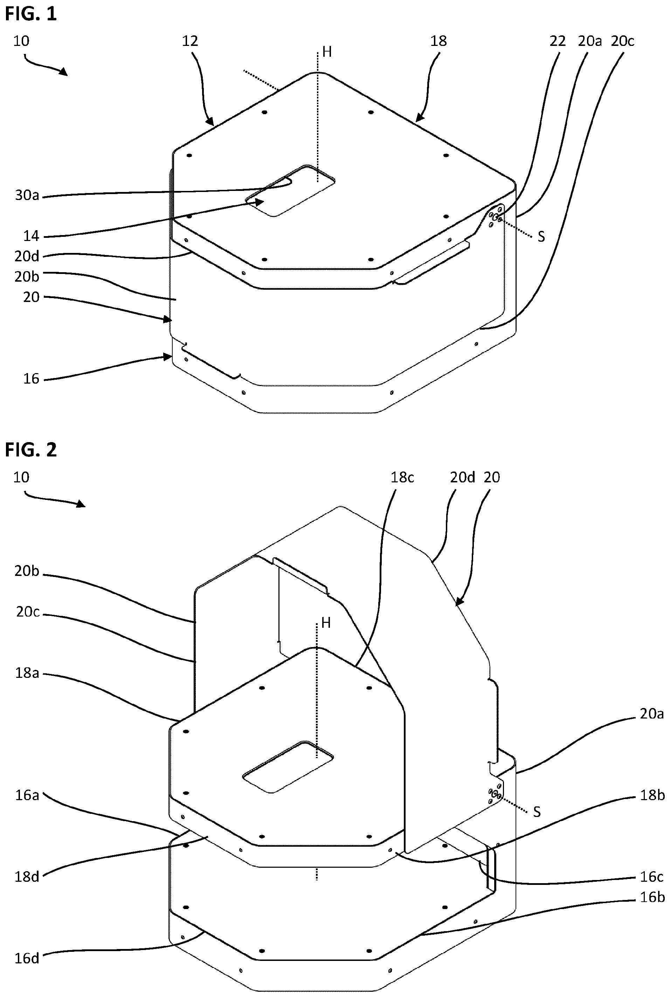

In FIG. 1 und FIG. 2 ist eine bevorzugte Ausführungsform eines erfindungsgemäßen Photometric-Stereo-Scanners 10 schematisch dargestellt. Der Scanner 10 umfasst ein erfindungsgemäßes Gehäuse 12, das gemäß einer bevorzugten Ausführungsform ausgebildet ist, und ein Smartphone 14, das ein Steuergerät 14 und eine Kamera 14 bildet.

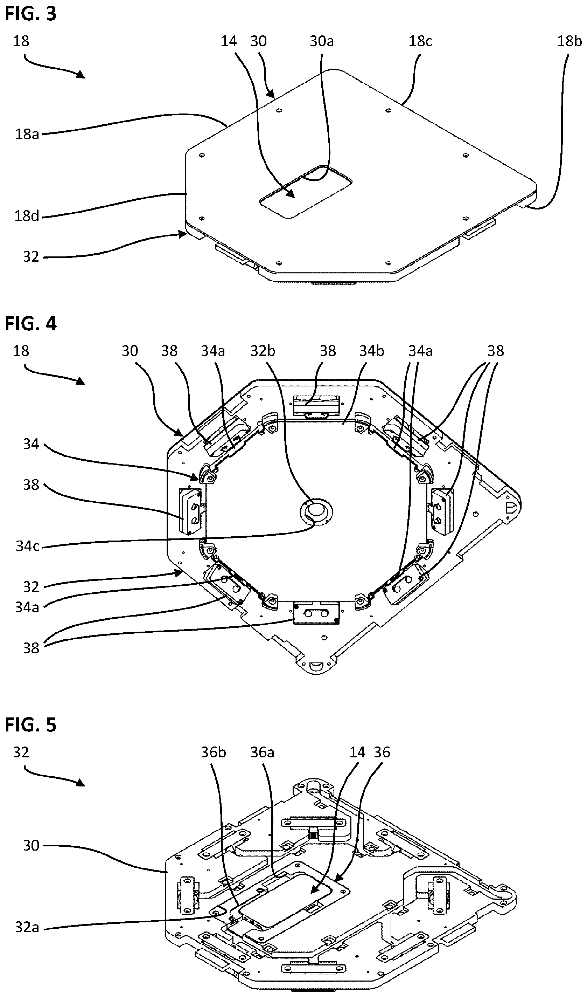

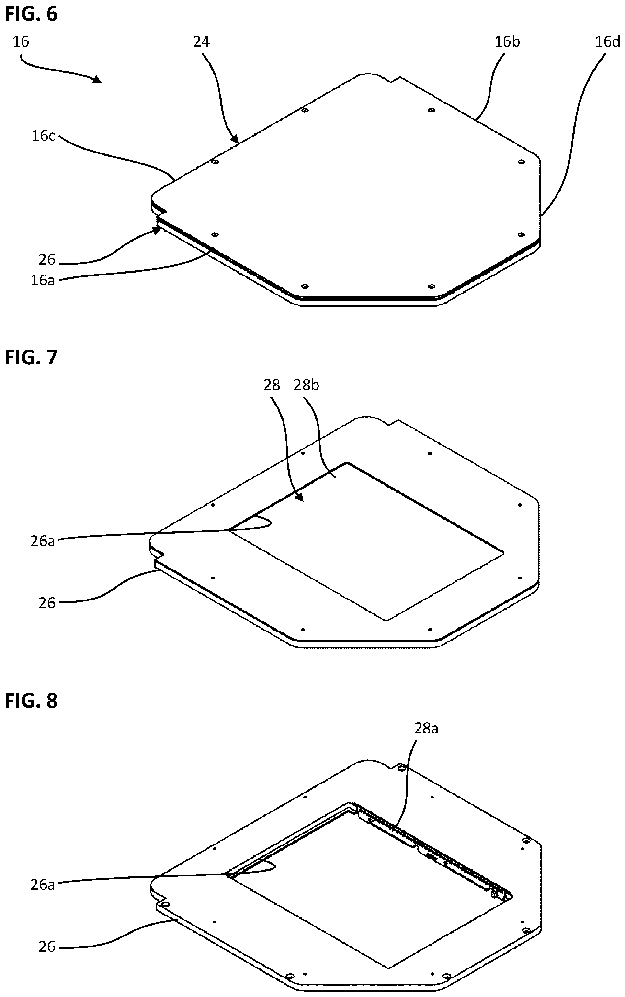

Das Gehäuse 12 umfasst einen Boden 16, der in FIG. 6 separat dargestellt ist, und eine Decke 18, die in FIG. 3 separat dargestellt ist. Der Boden 16 und die Decke 18 sind beispielhaft durch eine Bodenbaugruppe 16 beziehungsweise eine Deckenbaugruppe 18 gebildet. Die Bodenbaugruppe 16 weist eine erste oder linke Seitenkante 16a, eine zweite oder rechte Seitenkante 16b, die der linken Seitenkante 16a gegenüberliegt, sowie eine Hinterkante 16c und eine Vorderkante 16d auf, die die Seitenkanten 16a, 16b miteinander verbinden. Die Bodenbaugruppe 16 hat beispielhaft eine sechseckige Grundfläche, die einem Quadrat mit einer Seitenlänge von 3 Längeneinheiten entspricht, bei dem zwei benachbarte Ecken, beispielsweise eine vordere linke und eine vordere rechte Ecke, jeweils mit einem 45°-Schnitt entfernt sind, sodass zwei Schrägseiten, nämlich eine linke und eine rechte Schrägseite, entstehen, zwischen denen eine kurze, vordere Seite von 1 Längeneinheit verbleibt, die parallel zu der ungeschnittenen, hinteren Seite von 3 Längeneinheiten verläuft. Die beiden übrigen parallelen Seiten, nämlich die linke und die rechte Seite, die rechtwinklig an die hintere Seite angrenzen, haben somit eine Länge von 2 Längeneinheiten und sind über die beiden Schrägseiten mit der vorderen Seite verbunden. Die Seitenkanten 16a, 16b entsprechen der linken beziehungsweise der rechten Seite, die Hinterkante 16c entspricht der hinteren Seite, und die Vorderkante 16d entspricht der vorderen Seite und den beiden an diese angrenzenden Schrägseiten.

Die Grundflächen der Deckenbaugruppe 18 und der Bodenbaugruppe 16 sind beispielhaft im Wesentlichen gleich geformt und gleich groß und verlaufen im Wesentlichen parallel. Folglich weist die Deckenbaugruppe 18 analog zu der Bodenbaugruppe 16 eine erste oder linke Seitenkante 18a, eine zweite oder rechte Seitenkante 18b, die der linken Seitenkante 18a gegenüberliegt, sowie eine Hinterkante 18c und eine Vorderkante 18d auf, die die Seitenkanten 18a, 18b miteinander verbinden. Die Kanten 16a-d verlaufen jeweils im Wesentlichen parallel zu den Kanten 18a-d.

Das Gehäuse 12 umfasst eine Umfangswand 20, die den Boden 16 mit der Decke 18 verbindet und einen ersten und einen zweiten Wandabschnitt 20a, 20b aufweist. Die Umfangswand 20 ist beispielhaft um eine im Wesentlichen senkrechte Hochachse H, die durch die Mittelpunkte der sechseckigen Grundflächen der Bodenbaugruppe 16 und der Deckenbaugruppe 18 verläuft, umlaufend in sich geschlossen und bildet im Wesentlichen die Mantelfläche eines geraden sechseckigen Prismas, dessen Grundfläche den sechseckigen Grundflächen der Bodenbaugruppe 16 und der Deckenbaugruppe 18 entspricht. Der erste Wandabschnitt 20a verläuft beispielhaft im Wesentlichen senkrecht, also parallel zu der Hochachse H, zwischen den Hinterkanten 16c, 18c und ist dort mit der Bodenbaugruppe 16 und der Deckenbaugruppe 18 fest verbunden. In der FIG. 2 ist dargestellt, dass der rechte Randbereich des Wandabschnitts 20a rechtwinklig etwas bis auf die Seitenkanten 16b, 18b herumgezogen und dort mit der Bodenbaugruppe 16 und der Deckenbaugruppe 18 fest verbunden ist, und spiegelsymmetrisch hierzu ist auch der linke Randbereich des Wandabschnitts 20a rechtwinklig etwas bis auf die Seitenkanten 16a, 18a herumgezogen und dort mit der Bodenbaugruppe 16 und der Deckenbaugruppe 18 fest verbunden. In den oberen Bereichen dieser Randbereiche ist jeweils ein Schwenklager 22 angebracht, die eine im Wesentlichen waagerechte Schwenkachse S definieren, die parallel zu den Hinterkanten 16c, 18c und rechtwinklig zu der Hochachse H verläuft.

Der zweite Wandabschnitt 20b ist im Wesentlichen in Form eines Helmvisiers ausgebildet und kann eine Schließposition, die in der FIG. 1 dargestellt ist, und eine Offenposition, die in der FIG. 2 dargestellt ist, einnehmen. In der Schließposition umschließt er zusammen mit dem Bodenbaugruppe 16, dem Deckenbaugruppe 18 und dem ersten Wandabschnitt 20a einen Innenraum des Gehäuses 12, und in der Offenposition ist er um ungefähr 90° um die Schwenkachse S nach oben geschwenkt, so dass der Innenraum von außen zugänglich ist und die erste Seitenkante 16a, die zweite Seitenkante 16b und die Vorderkante 16d der Bodenbaugruppe 16 frei liegen. Der Wandabschnitt 20b verläuft in der Schließposition beispielhaft im Wesentlichen senkrecht, also parallel zu der Hochachse H, zwischen einerseits den Kanten 16a-c und andererseits den Kanten 18a-c. Der Wandabschnitt 20b weist eine Unterkante 20c auf, die in der Schließposition in unmittelbarer Nähe zu den Kanten 16a-c verläuft, sowie eine Oberkante 20d, die in der Schließposition in unmittelbarer Nähe zu den Kanten 18a-c verläuft. In der FIG. 1 ist dargestellt, dass das rechte der beiden Schwenklager 22 in einem rechts-oberen Eckbereich des Wandabschnitts 20b angebracht ist, und spiegelsymmetrisch hierzu ist das linke der beiden Schwenklager 22 in einem linksoberen Eckbereich des Wandabschnitts 20b angebracht. Folglich ist der Wandabschnitt 20b mittels der Schwenklager 22 an dem Wandabschnitt 20a beweglich gelagert und somit um die Schwenkachse S schwenkbar.

In der FIG. 6 ist die Bodenbaugruppe 16 separat dargestellt. Die Bodenbaugruppe 16 umfasst eine flache Bodenplatte 24, die beispielhaft transparent ist und aus Polymethylmethacrylat (PMMA) besteht, und eine zu der Bodenplatte 24 im Wesentlichen parallele Basisplatte 26, die in den FIG. 7 und 8 dargestellt ist und in ihrer Oberseite eine im Wesentlichen rechteckige Ausnehmung 26a aufweist. Die Bodenplatte 24 bildet die Kanten 16a-d und hat im Wesentlichen dieselbe Grundfläche wie die Basisplatte 26, die der Grundfläche der Bodenbaugruppe 16 entspricht. Die Bodenplatte 24 erstreckt sich im Wesentlichen plan und waagerecht zwischen den Kanten 16a-d. In der Schließposition liegt die Unterkante 20c auf der Bodenplatte 24 auf, in der Offenposition nicht.

Der Scanner 10 umfasst eine Flächenleuchte 28, die eine LED-Leiste 28a mit weißen LEDs, die zusammen mit der Basisplatte 26 in der FIG. 8 dargestellt ist, und eine im Wesentlichen rechteckige Streuscheibe 28b umfasst, die zusammen mit der Basisplatte 26 in der FIG. 7 dargestellt ist. Die LED-Leiste 28a ist an einer ersten Seitenfläche der Basisplatte 26 angebracht, die in der FIG. 8 rechts-hinten die Ausnehmung 26a begrenzt. Die Streuscheibe 28b liegt in der Ausnehmung 26a und weist eine Seitenfläche auf, die in der FIG. 7 nach rechts-hinten zu der ersten Seitenfläche und der LED-Leiste 28a hin weist. Die Bodenplatte 24 bedeckt die Flächenleuchte 28 und den sie umgebenden Randbereich der Basisplatte 26. Folglich kann die LED-Leiste 28a ihr Licht seitlich in die Streuscheibe 28b strahlen, die dieses Licht diffus nach oben zu der Bodenplatte 24 und durch diese hindurch zu der Deckenbaugruppe 18 hin streut. Somit umfasst der Scanner 10 eine Flächenleuchte 36, die an dem Boden 16 angebracht und zur Decke 18 gerichtet ist.

In der FIG. 3 ist die Deckenbaugruppe 18 separat dargestellt. Die Deckenbaugruppe 18 umfasst eine flache Deckenplatte 30, die eine im Wesentlichen rechteckige Durchgangsöffnung 30a aufweist, und eine zu der Deckenplatte 30 im Wesentlichen parallele Basisplatte 32, die in den FIG. 4 und 5 dargestellt ist und in ihrer Oberseite eine im Wesentlichen rechteckige Ausnehmung 32a und in dieser Ausnehmung 32a eine Öffnung, nämlich beispielhaft ein Durchgangsloch 32b aufweist, das zentrisch zu der Basisplatte 32 und der Hochachse H liegt. Die Deckenplatte 30 bildet die Kanten 18a-d und hat im Wesentlichen dieselbe Grundfläche wie die Basisplatte 32, die der Grundfläche der Deckenbaugruppe 18 entspricht. Die Deckenplatte 30 erstreckt sich im Wesentlichen plan und waagerecht zwischen den Kanten 18a-d. In der Schließposition liegt die Oberkante 20d an der Deckenplatte 30 beziehungsweise an der Deckenbaugruppe 18 an, in der Offenposition nicht.

Der Scanner 10 umfasst eine Diffusleuchte 34, die vier LED-Leisten 34a mit weißen LEDs und eine im Wesentlichen achteckige Streuscheibe 34b umfasst, die zusammen mit der Deckenplatte 30 und den LED-Leisten 34a in der FIG. 4 dargestellt ist. Die Streuscheibe 34b weist ein zentrisches Durchgangsloch 34c, das mit dem Durchgangsloch 32b der Basisplatte 32 fluchtet, auf und ist zentrisch unter der Basisplatte 32 derart angebracht, dass drei Seitenflächen, die nicht benachbart sind, parallel zu den Kanten 18a-c verlaufen. Die LED-Leisten 34a sind unter der Basisplatte 32 derart angebracht, dass sie jeweils zu vier Seitenflächen der Streuscheibe 34b hin weisen, die nicht benachbart sind und in der FIG. 4 links-vorne, rechts-vorne, links-hinten und rechts-hinten liegen. Folglich sind die LED-Leisten 34a in gleichen Winkelabständen von 90° um die Hochachse H herum angeordnet und können ihr Licht aus vier Richtungen seitlich in die Streuscheibe 34b strahlen, die dieses Licht diffus nach unten zu der Bodenbaugruppe 16 hin streut. Somit umfasst der Scanner 10 eine Diffusleuchte 34, die unter der Decke 18 angebracht und zum Boden 16 gerichtet ist.

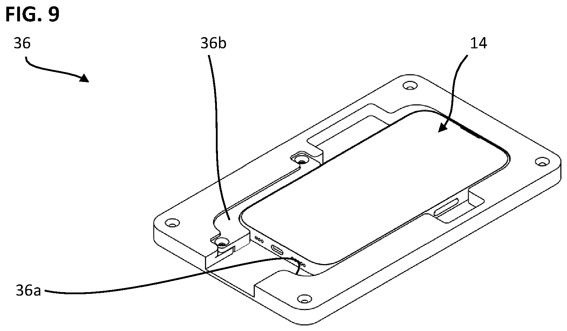

Das Gehäuse 12 umfasst eine Halterung 36 für das Smartphone 14, die zusammen mit der Basisplatte 32 in der FIG. 5 und separat in der FIG. 9 dargestellt ist und eine im Wesentlichen rechteckige Ausnehmung 36a zur Aufnahme des Smartphones 14, einen ersten Rahmen 36b und in dieser Ausnehmung 36a ein Durchgangsloch (nicht dargestellt) aufweist, das mit dem Durchgangsloch 32b der Basisplatte 32 fluchtet. Die Halterung 36 sitzt in der Ausnehmung 32a und ist mit der Basisplatte 32 verschraubt. Der Rahmen 36b sitzt in der Ausnehmung 36a und ist mit der Halterung 36 verschraubt, sodass er herausgenommen oder gegen einen anderen Rahmen ausgewechselt werden kann. Die Ausnehmung 36a fluchtet oder überlappt mit der Durchgangsöffnung 30a der Deckenplatte 30. Das Smartphone 14 sitzt derart in der Ausnehmung 36a, dass sein Touchdisplay nach oben von der Basisplatte 32 weg weist und durch die Durchgangsöffnung 30a von einem Nutzer berührt werden kann. Das Smartphone 14 sitzt derart in der Ausnehmung 36a, dass seine Seitenflächen an dem Rahmen 36b und an Innenflächen der Ausnehmung 36a anliegen und seine Kamera (nicht dargestellt) nach unten zu der Basisplatte 32 hin weist und mit dem Durchgangsloch in der Ausnehmung 36a fluchtet. Folglich fluchtet die Kamera auch mit dem Durchgangsloch 32b in der Basisplatte 32 und dem Durchgangsloch 34c in der Streuscheibe 34b. Somit ist die Kamera derart an der Halterung 36 angebracht, dass die Kamera auf der Decke 18 angebracht und durch eine Öffnung, die in der Decke 18 ausgebildet ist und durch das Durchgangsloch in der Ausnehmung 36a, das Durchgangsloch 32b und das Durchgangsloch 34c gebildet ist, zum Boden 16 gerichtet ist.

Das Gehäuse 12 umfasst beispielhaft acht Lampen 38, die zusammen mit der Deckenplatte 30 und der Diffusleuchte 34 in der FIG. 4 dargestellt sind und beispielhaft LEDs umfassen. Die Lampen 38 sind unter der Basisplatte 32 derart angebracht, dass sie zum Boden 18 gerichtet sind und sich jeweils zwischen dem Rand der Deckenbaugruppe 18 und den acht Seitenflächen der Streuscheibe 34b befinden. Folglich sind die Lampen 38 in gleichen Winkelabständen von 45° um die Hochachse H herum angeordnet und können ihr Licht aus acht unterschiedlichen Richtungen schräg nach unten auf die Bodenplatte 24 strahlen. Somit umfasst der Scanner 10 mindestens drei Lampen 38, die an oder unter der Decke 16 angebracht und zum Boden 18 gerichtet sind.

Das Gehäuse 12 umfasst einen Steckverbinder (nicht dargestellt), der beispielhaft ein Thunderbolt-Stecker ist, sowie Steuerleitungen (nicht dargestellt), die einerseits an diesen Steckverbinder und andererseits an die Flächenleuchte 28, die Diffusleuchte 34 und die Lampen 38 angeschlossen sind. Das Smartphone 14, das das Steuergerät 14 bildet, umfasst einen passenden Steckverbinder (nicht dargestellt), der beispielhaft eine Thunderbolt-Buchse ist, in den der Thunderbolt-Stecker gesteckt ist.

### BEZUGSZEICHENLISTE

- 10: Photometric-Stereo-Scanner 10
- 12: Gehäuse
- 14: Smartphone, Steuergerät, Kamera
- 16: Boden, Bodenbaugruppe
- 16a/b: erste, linke/zweite, rechte Seitenkante von 16
- 16c/d: Hinterkante/Vorderkante von 16
- 18: Decke, Deckenbaugruppe
- 18a/b: erste, linke/zweite, rechte Seitenkante von 18
- 18c/d: Hinterkante/Vorderkante von 18
- 20: Umfangswand
- 20a/b: erster/zweiter Wandabschnitt von 20
- 20c/d: Unterkante/Oberkante von 20b
- 22: Schwenklager
- 24: Bodenplatte von 16
- 26: Basisplatte von 16
- 26a: Ausnehmung von 26
- 28: Flächenleuchte
- 28a/b: LED-Leiste/Streuscheibe von 28
- 30: Deckenplatte von 18
- 30a: Durchgangsöffnung von 30
- 32: Basisplatte von 18
- 32a/b: Ausnehmung/Durchgangsloch von 32
- 34: Diffusleuchte
- 34a/b: LED-Leisten/Streuscheibe von 34
- 34c: Durchgangsloch von 34b
- 36: Halterung
- 36a/b: Ausnehmung/Rahmen von 36
- 38: Lampen
- H: Hochachse
- S: Schwenkachse

## Patentansprüche

1. Gehäuse (12) für einen Photometric-Stereo-Scanner (10), umfassend
- einen Boden (16), der eine erste Seitenkante (16a), eine zweite Seitenkante (16b), die der ersten Seitenkante (16a) gegenüberliegt, und eine Vorderkante (16d), die die erste mit der zweiten Seitenkante (16a, 16b) verbindet, aufweist;
- eine Decke (18), an der mindestens drei Lampen (38) derart angebracht werden können, dass sie zum Boden (16) gerichtet sind;
- eine Umfangswand (20), die den Boden (16) mit der Decke (18) verbindet und einen ersten und einen zweiten Wandabschnitt (20a, 20b) aufweist;
- eine Halterung (36), an der eine Kamera (14) derart angebracht werden kann, dass die Kamera (14) entweder unter der Decke (18) angebracht und zum Boden (16) gerichtet ist oder auf der Decke (18) angebracht und durch eine Öffnung (32b) in der Decke (18) zum Boden (16) gerichtet ist;
wobei
- der zweite Wandabschnitt (20b) im Wesentlichen in Form eines Helmvisiers ausgebildet und an dem Boden (16), der Decke (18) und/oder dem ersten Wandabschnitt (20a) beweglich gelagert ist;
- der zweite Wandabschnitt (20b) eine Schließposition einnehmen kann, in der er zusammen mit dem Boden (16), der Decke (18) und dem ersten Wandabschnitt (20a) einen Innenraum des Gehäuses (12) umschließt;
- der zweite Wandabschnitt (20b) eine Offenposition einnehmen kann, in der der Innenraum von außen zugänglich ist und die erste und die zweite Seitenkante (16a, 16b) und die Vorderkante (16d) frei liegen.

2. Gehäuse (12) gemäß Anspruch 1, wobei
- der Boden (16) eine flache Bodenplatte (24) umfasst;
- der zweite Wandabschnitt (20b) eine Unterkante (20c) aufweist, die in der Schließposition auf der Bodenplatte (24) aufliegt und in der Offenposition nicht auf der Bodenplatte (24) aufliegt.

3. Gehäuse (12) gemäß einem oder mehreren der vorherigen Ansprüche, wobei
- der zweite Wandabschnitt (20b) um eine im Wesentlichen waagerechte Schwenkachse (S) schwenkbar ist.

4. Gehäuse (12) gemäß einem oder mehreren der vorherigen Ansprüche, umfassend
- mindestens drei Lampen (38), die an oder unter der Decke (18) angebracht und zum Boden (16) gerichtet sind.

5. Gehäuse (12) gemäß Anspruch 4, wobei
- die Lampen (38) in gleichen Winkelabständen um eine im Wesentlichen senkrechte Hochachse (H) herum angeordnet sind.

6. Gehäuse (12) gemäß einem oder mehreren der vorherigen Ansprüche, wobei
- an der Halterung (36) ein Steuergerät (14) für die Lampen (38) und für die Kamera (14) angebracht werden kann.

7. Gehäuse (12) gemäß einem oder mehreren der vorherigen Ansprüche, umfassend
- mindestens eine Diffusleuchte (34), die an oder unter der Decke (18) angebracht und zum Boden (16) gerichtet ist; und/oder
- mindestens eine Flächenleuchte (28), die an oder auf dem Boden (16) angebracht und zur Decke (18) gerichtet ist.

8. Gehäuse (12) gemäß einem oder mehreren der vorherigen Ansprüche, wobei
- die Halterung (36) einen ersten Rahmen (36b) umfasst, der auswechselbar auf der Decke (18) über der Öffnung (32b) angeordnet ist und passend zu einer ersten Kamera (14) oder einem ersten Smartphone (14), das eine Kamera (14) umfasst, ausgebildet ist.

9. Photometric-Stereo-Scanner (10) umfassend
- ein Gehäuse (12), das gemäß einem oder mehreren der Ansprüche 1 bis 8 ausgebildet ist;
- mindestens drei Lampen (38), die an oder unter der Decke (18) angebracht und zum Boden (16) gerichtet sind.

10. Photometric-Stereo-Scanner (10) gemäß Anspruch 9, umfassend
- ein Steuergerät (14), das an die Lampen (38) gekoppelt ist.

11. Photometric-Stereo-Scanner (10) gemäß einem oder mehreren der Ansprüche 9 bis 10, umfassend
- eine Kamera (14), die an der Halterung (36) angebracht ist.

12. Photometric-Stereo-Scanner (10) gemäß Anspruch 10 und 11, wobei
- das Steuergerät ein Smartphone (14) ist, das die Kamera umfasst.

13. Photometric-Stereo-Scanner (10) gemäß einem oder mehreren der Ansprüche 9 bis 12, umfassend
- mindestens eine Diffusleuchte (34), die unter der Decke (18) angebracht und zum Boden (16) gerichtet ist; und/oder
- mindestens eine Flächenleuchte (28), die an dem Boden (16) angebracht und zur Decke (18) gerichtet ist.
